# EUROPEAN PATENT APPLICATION

(11) **EP 4 787 916 A1**
(43) Date of publication of application: **05.08.2026**
(21) Application number: 26154684.0
(22) Date of filing: 28.01.2026
(51) Int. Cl.: H04W 12/02, H04W 12/122, H04W 74/08, H04B 7/06, H04W 12/75

(54) **INITIAL ACCESS IN WIRELESS NETWORKS WITH REDUCED LIKELIHOOD OF DETECTION, AND RELATED DEVICES, METHODS AND COMPUTER PROGRAMS**

(30) Priority: 03.02.2025 GB 202501521
(71) Applicant: Nokia Solutions and Networks Oy, 02610 Espoo (FI)
(72) Inventor: JAIN, Akshay, Helsinki (FI); UPADHYA, Karthik, Bangalore (IN); HAMILTON, Alexander, Cambridge (GB)
(74) Representative: Nokia EPO representatives

(57) **Abstract**

Devices, methods and computer programs for initial access in wireless networks with reduced likelihood of detection are disclosed. At least some example embodiments may allow a user device -sided initial access in wireless networks with reduced likelihood of detection without a need for any modifications to the user device, and thus without a need for an additional or auxiliary user device attached to an existing user device for bypassing these modifications.

## Description

### TECHNICAL FIELD

The disclosure relates generally to communications and, more particularly but not exclusively, to initial access in wireless networks with reduced likelihood of detection, as well as related devices, methods and computer programs.

### BACKGROUND

Initial access procedures (including, e.g., an initial system and cell search, as well as time and frequency synchronizations) are utilized in mobile telecommunications (e.g., fourth generation (4G), fifth generation (5G), and sixth generation (6G) wireless networks) between a user equipment (UE) and a network node (e.g., a gNB) to facilitate the UE to acquire uplink synchronization and obtain a specific identifier (ID) for radio access communications.

However, currently the initial access phase is unsecured, and instead optimized for coverage. The entire initial access procedure from downlink (DL) synchronization to physical random-access channel (PRACH) transmission has been optimized for coverage. The flip side of this optimization is that these transmissions can easily be detected.

Particularly in critical or tactical networks (such as networks used by, e.g., the military, authorities, government agencies, public safety agencies, emergency responders, transport industries, etc.) the easy detectability of the initial access procedures is an issue because this easy detectability makes it easier for an adversary to detect critical communication and, consequently, the easy detectability makes it easier for the adversary to jam or intercept this critical communication.

Accordingly, at least in some situations, there may be a need for reducing the likelihood of detecting initial access in wireless networks.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a user device comprises at least one processor, and at least one memory storing instructions that, when executed by the at least one processor, cause the user device at least to detect the user device being turned on. The instructions, when executed by the at least one processor, further cause the user device at least to initiate in response an initial access procedure in a radio access network cell comprising the user device and a network node device. The initiation of the initial access procedure comprises transmitting to the network node device an initiation message indicating the initiation of the initial access procedure. The initiation message is transmitted before receiving any synchronization signalling from the network node device.

In an example embodiment, alternatively or in addition to the above-described example embodiments, the instructions, when executed by the at least one processor, further cause the user device to perform the transmitting of the initiation message via uplink, UL, control signalling.

In an example embodiment, alternatively or in addition to the above-described example embodiments, the initiation message comprises at least one of a preamble, an identifier of the user device, an indication of a UL transmit power of the user device, or an indication of a reference signal received power, RSRP, of the network node device.

In an example embodiment, alternatively or in addition to the above-described example embodiments, the preamble comprises a preamble based on a long format of control signalling.

In an example embodiment, alternatively or in addition to the above-described example embodiments, the preamble comprises a preamble based on a constant amplitude zero autocorrelation, CAZAC, sequence.

In an example embodiment, alternatively or in addition to the above-described example embodiments, at least one of the identifier of the user device, the indication of the UL transmit power of the user device, or the indication of the RSRP of the network node device is included in a payload of the initiation message.

In an example embodiment, alternatively or in addition to the above-described example embodiments, the identifier of the user device comprises a shared key or a nonce.

An example embodiment of a method comprises detecting, by a user device, the user device being turned on. The method further comprises in response initiating, by the user device, an initial access procedure in a radio access network cell comprising the user device and a network node device. The initiation of the initial access procedure comprises transmitting to the network node device an initiation message indicating the initiation of the initial access procedure. The initiation message is transmitted before receiving any synchronization signalling from the network node device.

An example embodiment of an apparatus comprises means for carrying out a method according to any of the above-described example embodiments.

An example embodiment of a computer program comprises instructions for causing a user device to perform at least the following: detecting the user device being turned on; and in response, initiating an initial access procedure in a radio access network cell comprising the user device and a network node device, wherein the initiation of the initial access procedure comprises transmitting to the network node device an initiation message indicating the initiation of the initial access procedure, the initiation message transmitted before receiving any synchronization signalling from the network node device.

An example embodiment of a network node device comprises at least one processor, and at least one memory storing instructions that, when executed by the at least one processor, cause the network node device at least to receive from a user device an initiation message indicating an initiation of an initial access procedure. The initiation message is received before transmitting any synchronization signalling to the user device. The instructions, when executed by the at least one processor, further cause the network node device at least to transmit the synchronization signalling to the user device.

In an example embodiment, alternatively or in addition to the above-described example embodiments, the instructions, when executed by the at least one processor, further cause the network node device to perform the receiving of the initiation message via uplink, UL, control signalling.

In an example embodiment, alternatively or in addition to the above-described example embodiments, the initiation message comprises at least one of a preamble, an identifier of the user device, an indication of a UL transmit power of the user device, or an indication of a reference signal received power, RSRP, of the network node device.

In an example embodiment, alternatively or in addition to the above-described example embodiments, the instructions, when executed by the at least one processor, further cause the network node device to determine a downlink, DL, transmit power for the synchronization signalling based at least on one of the received indication of the UL transmit power of the user device or the received indication of the RSRP of the network node device.

In an example embodiment, alternatively or in addition to the above-described example embodiments, the instructions, when executed by the at least one processor, further cause the network node device to determine beamforming weights for the synchronization signalling based on channel state information, CSI, derived from the received initiation message indicating the initiation of the initial access procedure.

An example embodiment of a method comprises receiving, at a network node device from a user device, an initiation message indicating an initiation of an initial access procedure. The initiation message is received before transmitting any synchronization signalling to the user device. The method further comprises transmitting the synchronization signalling from the network node device to the user device.

An example embodiment of an apparatus comprises means for carrying out a method according to any of the above-described example embodiments.

An example embodiment of a computer program comprises instructions for causing a network node device to perform at least the following receiving from a user device an initiation message indicating an initiation of an initial access procedure, the initiation message received before transmitting any synchronization signalling to the user device; and transmitting the synchronization signalling to the user device.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** shows an example embodiment of the subject matter described herein illustrating an example system, where various embodiments of the present disclosure may be implemented;
**FIG. 2A** shows an example embodiment of the subject matter described herein illustrating a user device;
**FIG. 2B** shows an example embodiment of the subject matter described herein illustrating a network node device;
**FIG. 3A** is a diagram illustrating a time-frequency grid structure of a synchronization signalling block;
**FIG. 3B** shows an example embodiment of the subject matter described herein illustrating an example format for an initiation message;
**FIG. 4** shows an example embodiment of the subject matter described herein illustrating an implementation of the disclosure;
**FIG. 5A** shows an example embodiment of the subject matter described herein illustrating a method for a user device; and
**FIG. 5B** shows an example embodiment of the subject matter described herein illustrating a method for a network node device.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

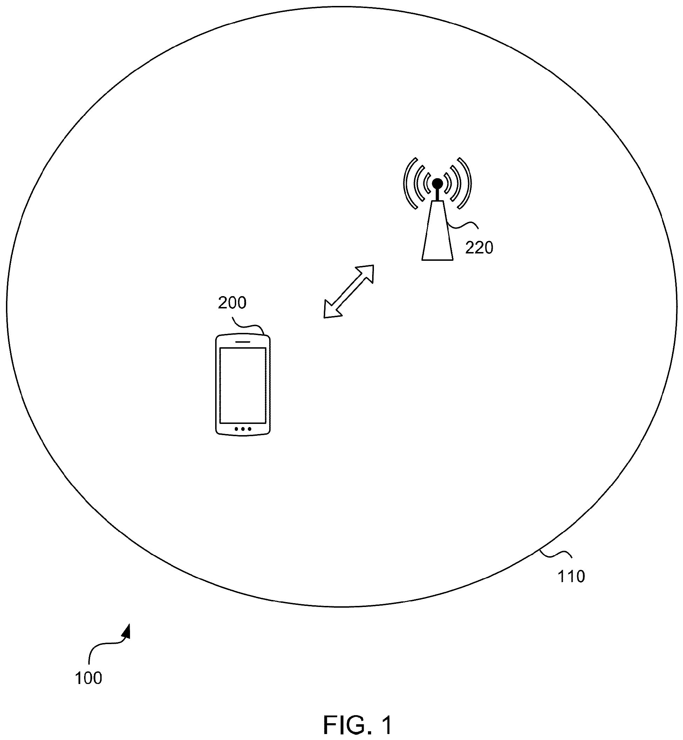

Fig. 1 illustrates example system 100, where various embodiments of the present disclosure may be implemented. System 100 may comprise radio access network cell 110 of a fifth generation (5G) or sixth generation (6G) communication network or a communication network beyond 6G wireless networks. An example representation of system 100 is shown depicting user device 200 and network node device 220. At least in some embodiments, radio access network cell 110 may be comprised in a critical or tactical network, including, e.g., one or more of a cellular communication network, a massive machine-to-machine (M2M) network, massive machine type communications (mMTC) network, internet of things (IoT) network, industrial internet-of-things (IIoT) network, enhanced mobile broadband (eMBB) network, ultra-reliable low-latency communication (URLLC) network, and/or the like. In other words, the network of radio access network cell 110 may be configured to serve diverse service types and/or use cases, and it may logically be seen as comprising one or more networks.

User device 200 may include, e.g., a mobile communication device, a mobile phone, a wireless communication device, a tablet computer, a smart watch, a smart ring, smart glasses, a smart audio headset, an AR/VR/XR (augmented reality, virtual reality, extended reality) device, any hand-held, portable and/or wearable device, a television, a vehicle infotainment unit, or any combination thereof. User device 200 may also be referred to as a user equipment (UE). Network node device 220 may comprise, e.g., a base station (such as a gNB). The base station may include, e.g., any device suitable for providing an air interface for user devices to connect to a wireless network via wireless transmissions.

In the following, various concepts and terms that may be relevant to at least some example embodiments will be discussed.

At least in some situations, an initial access procedure in may comprise two parts: downlink (DL) and uplink (UL) synchronization. A network node device (e.g., a gNB) may initiate DL synchronization over a broadcast channel, and a user device may listen to these DL synchronization signals (SSs) to extract information from the synchronization signals and from a master information block (MIB). Following this, the user device may initiate UL synchronization via a random-access channel (RACH) procedure. For DL synchronization, the network node may broadcast a synchronization signal block (SSB) which may be a combination of the synchronization signals (SSs) and physical broadcast channel (PBCH). There may be two synchronization signals: a primary SS (PSS) and a secondary SS (SSS) which may be, e.g., binary phase-shift keying (BPSK) modulated m- and Gold-sequences, respectively, with a sequence length of 127. The PSS may be generated with parameter NID2, and the SSS may be generated with both NID1 and NID2, where NID1 ∈ {0, 1,..., 335} and NID2 ∈ {0, 1, 2} may together form a physical cell ID (PCI).

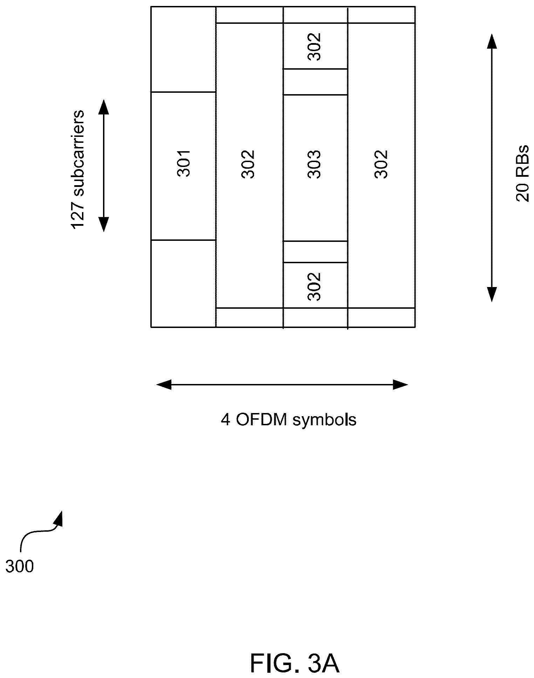

Diagram 300 of Fig. 3A illustrates a time-frequency grid structure of an SSB. The SSB may span, e.g., 4 orthogonal frequency division multiplexing (OFDM) symbols in the time domain and 20 resource blocks (RBs) in the frequency domain. For example, the first symbol may contain only PSS 301 and may be used by the user device for detecting the SSB, inferring NID2, and performing coarse frequency-estimation. For example, the third symbol in an SSB may contain SSS 303 surrounded by PBCH 302. For example, the user device may utilize SSS 303 to infer NID1 and evaluate a reference signal received power (RSRP). An estimated PCI may then be used to decode PBCH 302.

In the following, various example embodiments will be discussed. At least some of these example embodiments described herein may allow initial access in wireless networks with reduced likelihood of detection.

Furthermore, at least some of the example embodiments described herein may allow a user device - sided initial access in wireless networks with reduced likelihood of detection without a need for any modifications to the user device, and thus without a need for an additional or auxiliary user device attached to an existing user device for bypassing these modifications.

Furthermore, at least some of the example embodiments described herein may allow modifying the initial access procedure so that an UL control message (such as a disclosed initiation message) is transmitted before DL synchronization. Moreover, this may allow the user device itself, without needing an auxiliary user device, to be able to execute the user device -sided initial access signalling.

Furthermore, at least some of the example embodiments described herein may allow a packet structure for this UL control message that a user device sends before a network node device initiates the DL SSB signalling.

Furthermore, at least some of the example embodiments described herein may allow a new message (such as a disclosed initiation message) for the user device -sided initial access procedure which is sent first as a part of the UL control signalling. After receiving this message, the network node device may determine a best CSI -based DL beamforming as well as a DL transmit power for the DL SSB synchronization. Then, the rest of the UL control signalling may be executed in a conventional manner.

Furthermore, at least some of the example embodiments described herein may allow modifying the initial access such that the UL control signalling happens before DL synchronization.

Furthermore, at least some of the example embodiments described herein may allow modifying the UL control signalling to carry a payload that contains data that authenticates the user device, and/or an UL transmit power of the user device, thereby allowing the message structure to be used for initial access UL signalling.

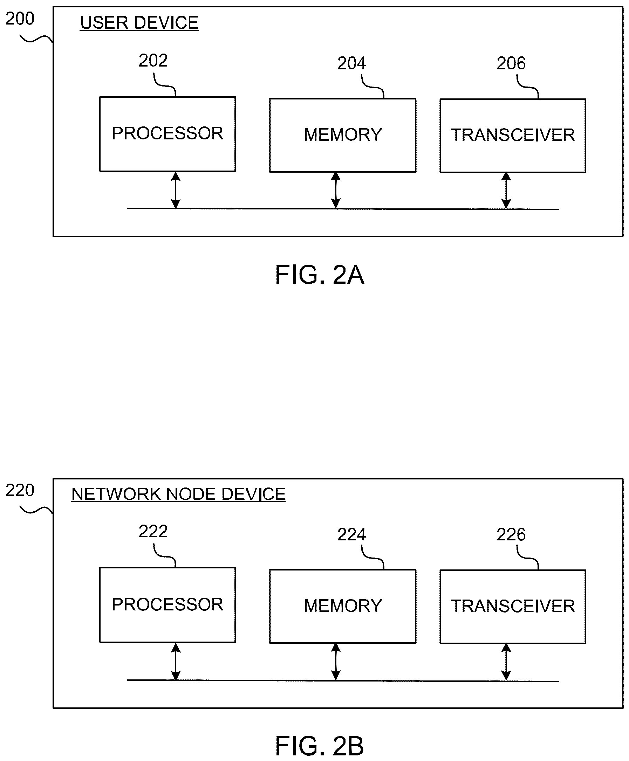

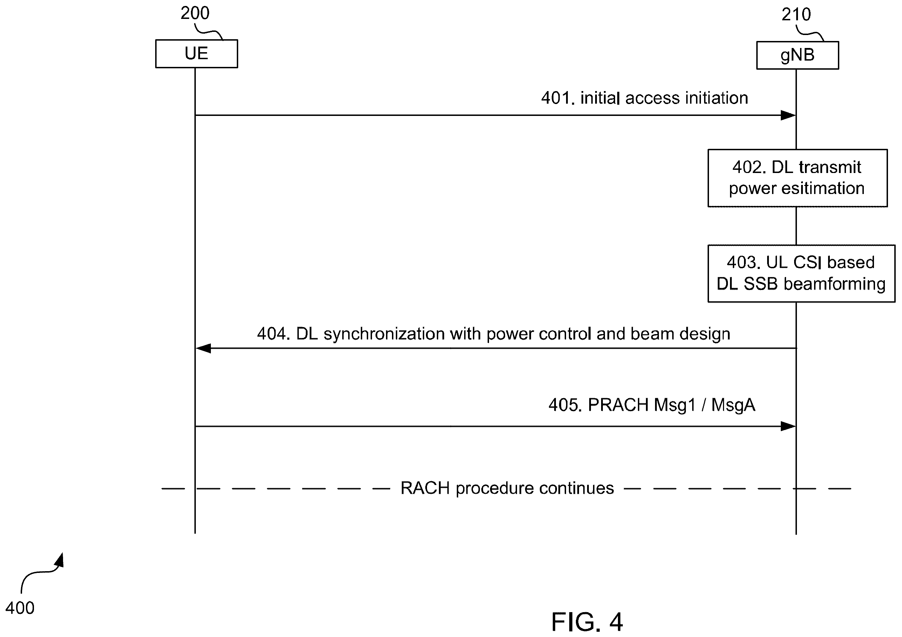

Fig. 2A is a block diagram of user device 200, in accordance with an example embodiment. Diagram 400 of Fig. 4 illustrates an example implementation of the disclosure.

User device 200 comprises one or more processors 202 and one or more memories 204 that comprise computer program code. User device 200 may also include other elements, such as transceiver 206 configured to enable user device 200 to transmit and/or receive information to/from other devices, as well as other elements not shown in Fig. 2A. In one example, user device 200 may use transceiver 206 to transmit or receive signalling information and data in accordance with at least one cellular communication protocol. Transceiver 206 may be configured to provide at least one wireless radio connection, such as for example a 3GPP mobile broadband connection (e.g., 5G or 6G). Transceiver 206 may comprise, or be configured to be coupled to, at least one antenna to transmit and/or receive radio frequency signals.

Although user device 200 is depicted to include only one processor 202, user device 200 may include more processors. In an embodiment, memory 204 is capable of storing instructions, such as an operating system and/or various applications. Furthermore, memory 204 may include a storage that may be used to store, e.g., at least some of the information and data used in the disclosed embodiments.

Furthermore, processor 202 is capable of executing the stored instructions. In an embodiment, processor 202 may be embodied as a multi-core processor, a single core processor, or a combination of one or more multi-core processors and one or more single core processors. For example, processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 202 may be configured to execute hard-coded functionality. In an embodiment, processor 202 is embodied as an executor of software instructions, wherein the instructions may specifically configure processor 202 to perform the algorithms and/or operations described herein when the instructions are executed.

Memory 204 may be embodied as one or more volatile memory devices, one or more non-volatile memory devices, and/or a combination of one or more volatile memory devices and non-volatile memory devices. For example, memory 204 may be embodied as semiconductor memories (such as mask ROM, PROM (programmable ROM), EPROM (erasable PROM), flash ROM, RAM (random-access memory), etc.).

User device 200 may comprise any of various types of devices used directly by an end user entity and capable of communication in a wireless network, such as a user equipment (UE). Such devices include but are not limited to smartphones, tablet computers, smart watches, lap top computers, internet-of-things (IoT) devices, massive machine-to-machine (M2M) devices, massive machine type communications (mMTC) devices, industrial internet-of-things (IIoT) devices, enhanced mobile broadband (eMBB) devices, ultra-reliable low-latency communication (URLLC) devices, relay nodes (such as integrated access and backhaul nodes) configured to facilitate backhaul connections, and/or devices mounted in vehicles, etc.

When executed by at least one processor 202, instructions stored in at least one memory 204 cause user device 200 at least to detect that user device 200 is being turned on.

The instructions, when executed by at least one processor 202, further cause user device 200 at least to initiate an initial access procedure in radio access network cell 110 comprising user device 200 and network node device 220, in response to the detecting of user device 200 being turned on.

The initiation of the initial access procedure comprises transmitting to network node device 220 an initiation message indicating the initiation of the initial access procedure (operation 401 in diagram 400 of Fig. 4). The initiation message is transmitted before receiving any synchronization signalling from network node device 220. For example, the initiation message may comprise a preamble, an identifier of user device 200, an indication of a UL transmit power of user device 200, and/or an indication of a reference signal received power (RSRP) of network node device 220. For example, the identifier of user device 200 may comprise a shared key or a nonce.

At least in some embodiments, the instructions, when executed by at least one processor 202, may further cause user device 200 to perform the transmitting of the initiation message via uplink (UL) control signalling.

At least in some embodiments, the preamble may comprise a preamble based on a long format of control signalling (e.g., on a long format of a physical random-access channel (PRACH)). Alternatively or additionally, the preamble may comprise a preamble based on a constant amplitude zero autocorrelation (CAZAC) sequence.

At least in some embodiments, the identifier of user device 200, the indication of the UL transmit power of user device 200, and/or the indication of the RSRP of network node device 220 may be included in a payload of the initiation message.

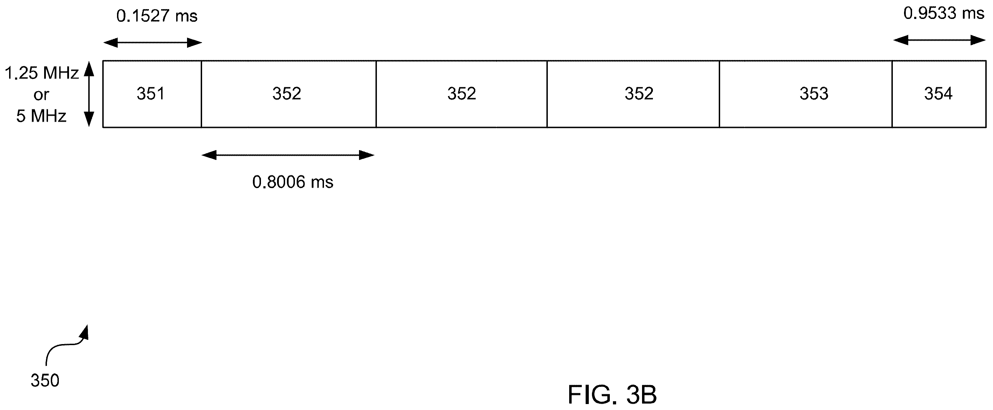

Diagram 350 of Fig. 3B illustrates an example long format for the initiation message. More specifically, the packet format for the initiation message may be based on a preamble of a long format 2 of PRACH (or of another suitable control plane signalling packet structure), for example. This is because the long format allows for operations in large cells and it may also be used in smaller cells at reduced transmit power requirements. In addition to the preamble (including, e.g., cyclic prefix 351, and two or more sequence repetitions 352), the initiation message may also carry payload 353, e.g., for authenticating user device 200 (e.g., with an identifier, such as a pre-shared key or a nonce), indicating its transmit power level, and optionally including other additional parameters when needed for efficient DL synchronization signalling that may follow. Further, the initiation message may comprise guard period (GP) 354.

In the example of in Fig. 3B, payload 353 replaces one of sequence repetitions 352. The length of payload 353 may be subject to requirements. It may be nominally indicated that instead of a sequence repetition, a set of parameters that network node device 220 may need for the user device 200 -sided initial access -based DL synchronization is to be transmitted during this duration. In case it is desirable to avoid replacing a sequence repetition in the long format for the initiation message, a sequence of data bits may be appended to the long format for the initiation message. As an additional option, the initiation message may be divided into two sets of messages.

At least in some embodiments, a portion of the bandwidth may be reserved for the initial access request messaging, and it may be pre-defined within user device 200 and/or network. This is because user device 200 may not receive information about time-frequency resources from network node device 220 (e.g., SIB1 is responsible for providing these details in 5G DL synchronization). Hence, a dedicated channel may allow user devices to know those time and frequency resources beforehand that are reserved for sending initiation messages and subsequent re-transmissions (operation 401 in diagram 400 of Fig. 4).

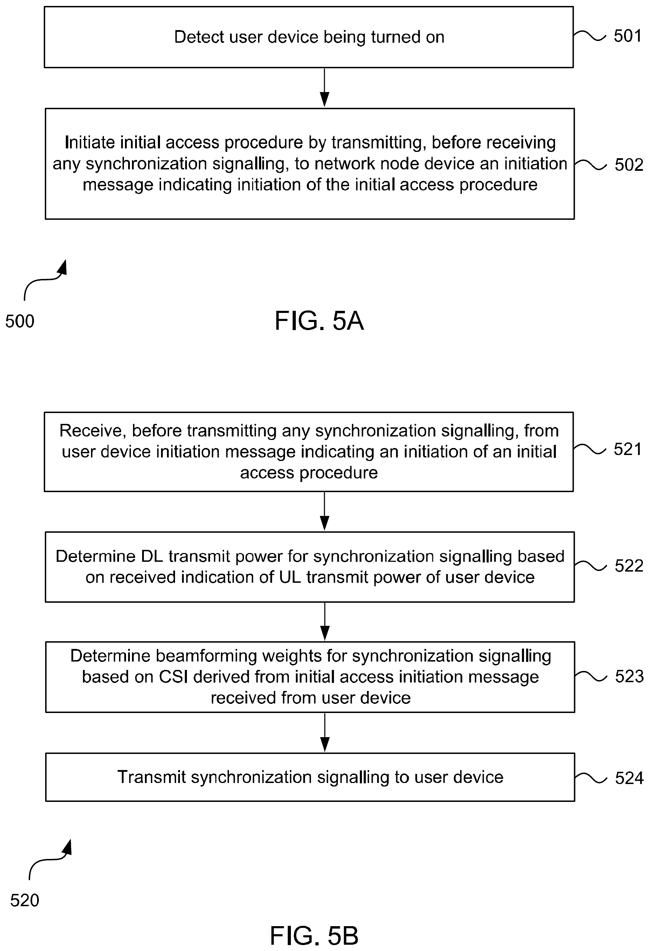

Fig. 5A illustrates an example flow chart of method 500 for user device 200, in accordance with an example embodiment.

At operation 501, user device 200 detects that user device 200 is being turned on.

At operation 502, user device 200 initiates in response the initial access procedure in radio access network cell 110 comprising user device 200 and network node device 220. As described above in more detail, initiation 502 of the initial access procedure comprises transmitting to network node device 220 the initiation message indicating the initiation of the initial access procedure, and the initiation message is transmitted before receiving any synchronization signalling from network node device 220.

Embodiments and examples with regard to Fig. 5A may be carried out by user device 200 of Fig. 2A. Operations 501-502 may, for example, be carried out by at least one processor 202 and at least one memory 204. Further features of method 500 directly resulting from the functionalities and parameters of user device 200 are not repeated here. Method 500 can be carried out by computer program(s) or portions thereof.

Another example of an apparatus suitable for carrying out the embodiments and examples with regard to Fig. 5A comprises means for:
detecting, at operation 501, user device 200 being turned on; and
in response, initiating at operation 502, an initial access procedure in radio access network cell 110 comprising user device 200 and network node device 220,
wherein initiation 502 of the initial access procedure comprises transmitting to network node device 220 an initiation message indicating the initiation of the initial access procedure, the initiation message transmitted before receiving any synchronization signalling from network node device 220.

Fig. 2B is a block diagram of network node device 220, in accordance with an example embodiment.

Network node device 220 comprises one or more processors 222 and one or more memories 224 that comprise computer program code. Network node device 220 may also include other elements, such as transceiver 226 configured to enable network node device 220 to transmit and/or receive information to/from other devices, as well as other elements not shown in Fig. 2B. In one example, network node device 220 may use transceiver 226 to transmit or receive signalling information and data in accordance with at least one cellular communication protocol. Transceiver 226 may be configured to provide at least one wireless radio connection, such as for example a 3GPP mobile broadband connection (e.g., 5G advanced or beyond). Transceiver 226 may comprise, or be configured to be coupled to, at least one antenna to transmit and/or receive radio frequency signals.

Although network node device 220 is depicted to include only one processor 222, network node device 220 may include more processors. In an embodiment, memory 224 is capable of storing instructions, such as an operating system and/or various applications. Furthermore, memory 224 may include a storage that may be used to store, e.g., at least some of the information and data used in the disclosed embodiments.

Furthermore, processor 222 is capable of executing the stored instructions. In an embodiment, processor 222 may be embodied as a multi-core processor, a single core processor, or a combination of one or more multi-core processors and one or more single core processors. For example, processor 222 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 222 may be configured to execute hard-coded functionality. In an embodiment, processor 222 is embodied as an executor of software instructions, wherein the instructions may specifically configure processor 222 to perform the algorithms and/or operations described herein when the instructions are executed.

Memory 224 may be embodied as one or more volatile memory devices, one or more non-volatile memory devices, and/or a combination of one or more volatile memory devices and non-volatile memory devices. For example, memory 224 may be embodied as semiconductor memories (such as mask ROM, PROM (programmable ROM), EPROM (erasable PROM), flash ROM, RAM (random-access memory), etc.).

Network node device 220 may comprise a base station, and/or a relay node (such as an integrated access and backhaul node) configured to facilitate child (access) links for client devices connected to the relay node. The base station may include, e.g., a 5G advanced or 6G base station (gNB) or any such device providing an air interface for user device 200 to connect to a wireless network via wireless transmissions.

When executed by the at least one processor 222, instructions stored in at least one memory 224 cause network node device 220 at least to receive from user device 200 the initiation message indicating the initiation of the initial access procedure (operation 401 in diagram 400 of Fig. 4). The initiation message is received before transmitting any synchronization signalling to user device 200.

At least in some embodiments, the instructions, when executed by at least one processor 222, may further cause network node device 220 to perform the receiving of the initiation message via UL control signalling.

At least in some embodiments, the initiation message may comprise the preamble, the identifier of user device 200, the indication of the UL transmit power of user device 200, and/or the indication of the RSRP of network node device 220.

At least in some embodiments, the instructions, when executed by at least one processor 222, may further cause network node device 220 to determine a downlink (DL) transmit power for the synchronization signalling based at least on the received indication of the UL transmit power of user device 200 and/or the received indication of the RSRP of network node device 220 (operation 402 in diagram 400 of Fig. 4). In other words, at least in some embodiments the disclosure may allow network node device 220 to determine the smallest transmit power level with which user device 200 can detect PSS and SSS sequences as well as decode a PBCH.

At least in some embodiments, the instructions, when executed by at least one processor 222, may further cause network node device 220 to determine beamforming weights for the synchronization signalling (operation 403 in diagram 400 of Fig. 4) based on channel state information (CSI) derived from the received initiation message indicating the initiation of the initial access procedure. In other words, at least in some embodiments the disclosure may allow network node device 220 to determine a correct beam from grid of beams (GoB) candidate beams or a best possible precoding beam by utilizing the CSI feedback. For example, the CSI may be derived from the received UL control signalling sent by user device 200 before the synchronization messages. For example, network node device 220 may estimate the CSI from the preamble that user device 200 sends in the initiation message.

The instructions, when executed by at least one processor 222, further cause network node device 220 at least to transmit the synchronization signalling to user device 200 (operation 404 in diagram 400 of Fig. 4). At least in some embodiments, the transmitting of the synchronization signalling to user device 200 may be based on the determined DL transmit power for the synchronization signalling and/or the determined beamforming weights for the synchronization signalling.

In other words, once network node device 220 receives the initiation message, it may determine the DL power for the SSB by utilizing user device 200 UL transmit power information within the payload, and it may determine suitable beamforming weights using the UL CSI. Subsequently, network node device 220 may transmit the DL SSB using those parameters. Once user device 200 is able to decode the DL SSB, the control signalling process for UL synchronization may continue in a conventional manner (starting with operation 405 in diagram 400 of Fig. 4).

Further features of network node 220 directly result from the functionalities and parameters of user device 200 and thus are not repeated here.

Fig. 5B illustrates an example flow chart of method 520 for network node device 220, in accordance with an example embodiment.

At operation 521, network node device 220 receives from user device 200 the initiation message indicating the initiation of the initial access procedure. As described above in more detail, the initiation message is received before transmitting any synchronization signalling to user device 200.

At optional operation 522, network node device 220 may determine the DL transmit power for the synchronization signalling based on the received indication of the UL transmit power of user device 200.

At optional operation 523, network node device 220 may determine the beamforming weights for the synchronization signalling based on the CSI derived from the received initiation message indicating the initiation of the initial access procedure.

At operation 524, network node device 220 transmits the synchronization signalling to user device 200. As discussed above, the transmitting of the synchronization signalling to user device 200 of operation 524 may be based on the determined DL transmit power (optional operation 522) for the synchronization signalling and/or the determined beamforming weights (optional operation 523) for the synchronization signalling.

Embodiments and examples with regard to Fig. 5B may be carried out by user device 200 of Fig. 2B. Operations 521-524 may, for example, be carried out by at least one processor 222 and at least one memory 224. Further features of method 520 directly resulting from the functionalities and parameters of network node device 220 are not repeated here. Method 520 can be carried out by computer program(s) or portions thereof.

Another example of an apparatus suitable for carrying out the embodiments and examples with regard to Fig. 5B comprises means for:
receiving at operation 521, from user device 200, an initiation message indicating an initiation of an initial access procedure, the initiation message received before transmitting any synchronization signalling to user device 200; and
transmitting, at operation 524, the synchronization signalling to user device 200.

The functionality described herein can be performed, at least in part, by one or more computer program product components such as software components. According to an embodiment, user device 200 and/or network node device 220 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs) .

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A user device (200), comprising means for:
detecting the user device (200) being turned on; and
in response, initiating an initial access procedure in a radio access network cell (110) comprising the user device (200) and a network node device (220),
wherein the initiation of the initial access procedure comprises transmitting to the network node device (220) an initiation message indicating the initiation of the initial access procedure, the initiation message transmitted before receiving any synchronization signalling from the network node device (220).

2. The user device (200) according to claim 1, further comprising means for transmitting of the initiation message via uplink, UL, control signalling.

3. The user device (200) according to claim 1 or 2, wherein the initiation message comprises at least one of a preamble, an identifier of the user device (200), an indication of a UL transmit power of the user device (200), or an indication of a reference signal received power, RSRP, of the network node device (220).

4. The user device (200) according to claim 3, wherein the preamble comprises a preamble based on a long format of control signalling.

5. The user device (200) according to claim 3, wherein the preamble comprises a preamble based on a constant amplitude zero autocorrelation, CAZAC, sequence.

6. The user device (200) according to any of claims 3 to 5, wherein at least one of the identifier of the user device (200), the indication of the UL transmit power of the user device (200), or the indication of the RSRP of the network node device (220) is included in a payload of the initiation message.

7. The user device (200) according to any of claims 3 to 6, wherein the identifier of the user device (200) comprises a shared key or a nonce.

8. A method (500), comprising:
detecting (501), by a user device (200), the user device (200) being turned on; and
in response, initiating (502), by the user device (200), an initial access procedure in a radio access network cell (110) comprising the user device (200) and a network node device (220),
wherein the initiation (502) of the initial access procedure comprises transmitting to the network node device (220) an initiation message indicating the initiation of the initial access procedure, the initiation message transmitted before receiving any synchronization signalling from the network node device (220).

9. A computer program comprising instructions for causing a user device to perform at least the following:
detecting the user device being turned on; and
in response, initiating an initial access procedure in a radio access network cell comprising the user device and a network node device,
wherein the initiation of the initial access procedure comprises transmitting to the network node device an initiation message indicating the initiation of the initial access procedure, the initiation message transmitted before receiving any synchronization signalling from the network node device.

10. A network node device (220), comprising means for:
receiving from a user device (200) an initiation message indicating an initiation of an initial access procedure, the initiation message received before transmitting any synchronization signalling to the user device (200); and
transmitting the synchronization signalling to the user device (200).

11. The network node device (220) according to claim 10, further comprising means for performing the receiving of the initiation message via uplink, UL, control signalling.

12. The network node device (220) according to claim 10 or 11, wherein the initiation message comprises at least one of a preamble, an identifier of the user device (200), an indication of a UL transmit power of the user device (200), or an indication of a reference signal received power, RSRP, of the network node device (220).

13. The network node device (220) according to claim 12, further comprising means for:
determining a downlink, DL, transmit power for the synchronization signalling based at least on one of the received indication of the UL transmit power of the user device (200) or the received indication of the RSRP of the network node device (220); and
determining beamforming weights for the synchronization signalling based on channel state information, CSI, derived from the received initiation message indicating the initiation of the initial access procedure.

14. A method (520), comprising:
receiving (521), at a network node device (220) from a user device (200), an initiation message indicating an initiation of an initial access procedure, the initiation message received before transmitting any synchronization signalling to the user device (200); and
transmitting (524) the synchronization signalling from the network node device (220) to the user device (200).

15. A computer program comprising instructions for causing a network node device to perform at least the following:
receiving from a user device an initiation message indicating an initiation of an initial access procedure, the initiation message received before transmitting any synchronization signalling to the user device; and
transmitting the synchronization signalling to the user device.
